# EUROPÄISCHE PATENTSCHRIFT

(11) **EP 2 099 544 B1**
(45) Veröffentlichungstag und Bekanntmachung des Hinweises auf die Patenterteilung: **01.02.2012**
(21) Anmeldenummer: 07847716.3
(22) Anmeldetag: 04.12.2007
(51) Int. Cl.: B01D 29/11

(54) **ÖLFILTER, ÖLABSCHEIDER UND FILTEREINSATZ DAFÜR**
OIL FILTER, OIL SEPARATOR, AND FILTER CARTRIDGE THEREOF
FILTRE À HUILE, SÉPARATEUR D'HUILE ET ÉLÉMENT FILTRANT POUR CELUI-CI

(30) Priorität: 04.12.2006 DE 202006018334 U
(43) Veröffentlichungstag der Anmeldung: 16.09.2009
(73) Patentinhaber: MANN+HUMMEL GmbH, 71638 Ludwigsburg (DE)
(72) Erfinder: GILLENBERG, Eric, 67346 Speyer (DE); LAMPERT, Johannes, 82237 Wörthsee (DE); GUTEKUNST, Jens, 75053 Gondelsheim (DE); JAINEK, Herbert, 74074 Heilbronn (DE); RÖSGEN, André, 73630 Remshalden (DE); HÄHN, Jens, 69120 Heidelberg (DE); SCHILLING, Marco, 67354 Römersberg (DE); KLEIN, Dietmar, 76726 Germersheim (DE)
(86) Internationale Anmeldenummer: PCT/EP2007/063206
(87) Internationale Veröffentlichungsnummer: WO 2008/068237

(56) Entgegenhaltungen:
- EP-A- 1 306 117
- DE-U1- 20 011 003
- US-A- 4 721 563
- US-A- 5 685 985
- US-B1- 6 308 836

## Beschreibung

### Technisches Gebiet

Die Erfindung betrifft einen Filtereinsatz in einem Ölfilter oder einen Ölfilter mit den Merkmalen nach dem Oberbegriff des Anspruchs 1.

### Stand der Technik

In Kraftfahrzeugen und Industriemotoren werden Ölfilter eingesetzt, bei denen der Filtereinsatz getrennt vom Filtergehäuse ausgebildet ist. Der Ölfilter weist ein entlang einer Trennfläche teilbares Filtergehäuse auf, wobei zwei Gehäuseteile des Filtergehäuses entlang einer Trennfläche mittels einer Dichtung gegeneinander abgedichtet sind. Eines der beiden Gehäuseteile ist als Deckelteil ausgebildet und wird zum Auswechseln des Filtereinsatzes gelöst. Beim Auswechseln des Filtereinsatzes in den vorgeschriebenen Wartungsintervallen ist auch die Dichtung der beiden Gehäuseteile auszuwechseln.
So offenbart die US 6 308 836 B1 einen Filter mit einer Tragscheibe mit einer integrierten Dichtung am äußeren Ende.
In der EP1 306 117 A1 wird ein Filterelement mit einem im Bereich einer oder beider Endscheiben vorgesehenen, radialelastischen gestalteten Dichtungsträger beschrieben.
Im Dokument US 5 685 985 A1 ist eine Filterpatrone beschrieben, die eine radial wirkende Dichtfläche an den Endkappen aufweist und eine zusätzliche, axial wirkende Dichtfläche zur Abdichtung des Filtergehäuses. Der US4 721 563 A1 ist eine Filtereinrichtung für ein Fluid zu entnehmen, wobei das Filterelement eine metallische Endscheibe mit einer aufgesetzten, vorzugsweise rechtwinkligen Dichtung aufweist.
Die DE 200 11 003 U1 offenbart einen Fluidabscheider mit einem austauschbaren Filterelement und einem Koaleszenzfilter in einem Behälter mit einer axial wirkenden Dichtung, die den Behälter gegenüber der Umgebung und die Filtratseite gegenüber der Retentatseite zuverlässig abdichtet. Die Retentatseite und die Filtratseite sind nicht über einen Bypass verbindbar.

Im praktischen Betrieb ist zu beobachten, dass das Auswechseln der Gehäusedichtung vernachlässigt wird. Es kommt vor, dass die alte Dichtung nach dem Auswechseln des Filtereinsatzes erneut verwendet wird, was zu Undichtigkeiten am Filtergehäuse führen kann. Häufig wird auch eine falsche Dichtung eingesetzt oder die Dichtung sogar vollständig vergessen. In der Folge tritt Ölverlust ein. Folgeschäden, insbesondere Motorschäden sind nicht auszuschließen.

Die Möglichkeiten einer fehlerhaften Wartung im Bereich des Ölfilters werden noch dadurch erweitert, dass falsche, nur unzureichend passende bzw. den Qualitätsanforderungen nicht genügende Filtereinsätze Verwendung finden können. Diese mindern das Filtrierergebnis und können zu vorzeitigem Motorverschleiß oder sogar zu ernsthaften Motorschäden führen.

Bei Ölabscheidern für Kurbelgehäuseentlüftungssysteme bestehen ebenfalls die geschilderten Nachteile.

### Offenbarung der Erfindung

Der Erfindung liegt die Aufgabe zugrunde, einen Filtereinsatz mit verbesserter Handhabbarkeit bei Wartungsarbeiten anzugeben.

Diese Aufgabe wird durch einen Filtereinsatz mit den Merkmalen des Anspruchs 1 gelöst.

Der Erfindung liegt des weiteren die Aufgabe zugrunde, einen Ölfilter mit verbesserter Betriebssicherheit anzugeben.

Diese Aufgabe wird durch einen Ölfilter mit den Merkmalen des Anspruchs 3 gelöst.

Es wird ein auswechselbarer Filtereinsatz für den Betrieb in einem Verbrennungsmotor sowie ein entsprechender Ölfilter für den Verbrennungsmotor vorgeschlagen, bei dem der Ölfilter ein entlang einer Trennfläche teilbares Filtergehäuse sowie den entsprechenden auswechselbaren Filtereinsatz umfasst Zwei Gehäuseteile des Filtergehäuses sind entlang der Trennfläche mittels einer Dichtung gegeneinander abgedichtet. Die Dichtung ist unverlierbar am Filtereinsatz befestigt.

Nach der Erfindung bilden die Gehäusedichtung und der Filtereinsatz eine Baueinheit, die im Rahmen der vorgeschriebenen Wartungsintervalle als Gesamtheit ausgewechselt wird. Mit der Entnahme des alten Filtereinsatzes und dem Einbau des neuen Filtereinsatzes erfolgt durch die Zusammenfassung in einer Baueinheit zwangsläufig ein Auswechseln auch der Dichtung. Dadurch ist vermieden, dass letztere weder erneut verwendet noch beim Zusammenbau vergessen werden kann. Die Baueinheit aus Filtereinsatz und Dichtung muss systembedingt exakt an die Kontur des Filtergehäuses angepasst sein. Der Einbau von Filtereinsätzen mit abweichender Bauform, die gegebenenfalls nicht den Betriebsvorschriften entsprechen, ist erschwert oder sogar unmöglich. Vielmehr ist sichergestellt, dass infolge des geometrischen Zusammenspiels vom Filtergehäuse mit der Dichtung nur der exakt passende, vorschriftsmäßige Filtereinsatz eingebaut werden kann. Der verwechslungssichere Austausch des Filtereinsatzes ist vereinfacht und die Betriebssicherheit des Kraftfahrzeuges bzw. seiner Brennkraftmaschine erhöht.

Erfindungsgemäß ist am Filtereinsatz eine umlaufende Tragscheibe befestigt, an deren äußeren Rand die insbesondere als Profildichtung ausgeführte Dichtung umläuft. Die Tragscheibe kann mehrere Funktionen erfüllen: Bei entsprechender Bauform des Ölfilters kann sie als Trennwand zwischen der Rohseite und der Reinseite des Filters fungieren. Insbesondere bei einer Ausführung als umlaufende, bevorzugt ebene Tragscheibe, die zumindest in radialer Richtung im Wesentlichen starr ist, dient sie auch als Stützung bzw. Andruckmittel. Bei einer axialen Verpressung der Dichtung weitet sich diese in radialer Richtung auf und liegt dichtend an einer Gehäusedichtfläche an. Die in radialer Richtung starre Tragscheibe stellt eine dichtende, radiale Anpresskraft der Dichtung an eine entsprechende Gehäusedichtfläche sicher.

Hierzu fluchtet vorteilhaft die Trennfläche zumindest näherungsweise mit einer axialen Stirnfläche des Filtereinsatzes, wobei die Tragscheibe mit der Dichtung an der axialen Stirnfläche strömungsdicht ausgebildet und befestigt ist. Die strömungstechnische Trennung von Rohseite und Reinseite wird zuverlässig durch die gemeinsam mit dem Filtereinsatz auszutauschende Tragscheibe sichergestellt. Gleichzeitig positioniert die Tragscheibe die Dichtung in der vorgesehenen Einbaulage, nämlich in der Trennfläche zwischen den beiden Gehäuseteilen. Die Positionierung der Dichtung und des Filtereinsatzes insgesamt ist beim Einbau vereinfacht und im eingebauten Betriebszustand dauerhaft sichergestellt.

In einer bevorzugten Ausführung erstreckt sich das Filtergehäuse entlang einer Axialrichtung und ist insbesondere etwa zylindrisch ausgebildet, wobei die Trennfläche radial zur Axialrichtung verläuft, und wobei die umlaufende Dichtung im montierten Zustand in der Axialrichtung zwischen den beiden Gehäuseteilen eingeklemmt ist. Die Montage des Filtereinsatzes erfolgt in der Axialrichtung. Beim anschließenden Fügen der beiden Gehäuseteile des Filtergehäuses ebenfalls in der Axialrichtung wird die umlaufende Dichtung eingeklemmt und stellt zuverlässig eine Dichtung der beiden Gehäuseteile gegen einander her. Je nach Ausgestaltung der Tragscheibe und Position des Ölfilters insgesamt kann wahlweise als Zusatzfunktion auch eine Abdichtung der Rohseite gegenüber der Reinseite hergestellt werden.

Zusätzlich oder alternativ kann es vorteilhaft sein, dass die Dichtung in radialer Richtung gegen zumindest eines der beiden Gehäuseteile dichtend angedrückt ist. Diese radial angedrückte Dichtfunktion wird insbesondere durch die in radialer Richtung im Wesentlichen starre Tragscheibe unterstützt und aufrechterhalten.

Bevorzugt weist zumindest eines der beiden Gehäuseteile ein in der Ebene der Trennfläche auf die Dichtung einwirkende Klemmschräge auf. Beim axialen Anziehen der beiden Gehäuseteile gegeneinander wird die Klemmschräge relativ zur Dichtung bewegt, wodurch die Dichtung gestaucht bzw. verformt wird. Es entstehen hohe Anpresskräfte mit einer entsprechend zuverlässigen, dauerhaften Dichtwirkung.

In einer bevorzugten Ausführung ist die Dichtung am Filtereinsatz am äußeren Rand der Tragscheibe aufdosiert, aufgetragen oder erfindungsgemäß spritzgusstechnisch angebracht. Die Tragscheibe weist erfindungsgemäß im Bereich ihres äußeren Randes Durchbrüche auf, die vom spritzgegossenen Material der Dichtung durchgriffen sind. Die Baueinheit aus Filtereinsatz, Dichtung und ggf. der Tragscheibe weist eine innige, zuverlässige Verbindung ihrer Einzelkomponenten auf, die auch im rauhen Werkstattbetrieb unauflösbar erhalten bleibt.

Alternativ kann es auch zweckmäßig sein, dass die Dichtung am Filtereinsatz und insbesondere am äußeren Rand der Tragscheibe formschlüssig befestigt ist. Insbesondere ist die Dichtung elastisch federnd auf den äußeren Rand der Tragscheibe, insbesondere auf eine Aufdickung im Bereich des äußeren Randes aufgeknüpft.

In einer zweckmäßigen Variante ist die Dichtung in einer Nut im äußeren Rand der Tragscheibe formschlüssig gehalten. Die Montage kann mit geringem Vorrichtungsaufwand einfach, ggf. auch automatisiert erfolgen. Die Dichtung ist zuverlässig und unverlierbar am Filtereinsatz fixiert.

Erfindungsgemäß weist die Dichtung eine Montageschräge auf. Beim Einfädeln des Filtereinsatzes in das Filtergehäuse ist die Positionierung der Dichtung gegenüber dem Filtergehäuse vereinfacht, Insbesondere ist eine Beschädigung der Dichtung durch ungenaue Positionierung vermieden.

### Kurze Beschreibung der Zeichnungen

Ausführungsbeispiele der Erfindung sind im Folgenden anhand der Zeichnung näher beschrieben. Es zeigen:
- Fig. 1: in einem Längsschnitt einen erfindungsgemäß ausgeführten Ölfilter im Bereich der Trennfläche seiner beiden Gehäuseteile mit eingesetztem, eine unverlierbar befestigte Dichtung tragenden Filtereinsatz, wobei die Dichtung in radialer Richtung gegen einen Rand des unteren Gehäuseteils abgestützt ist;
- Fig. 2: eine Variante der Anordnung nach Fig. 1 mit in radialer Richtung gegen das Deckelteil des Filtergehäuses abgestützter Dichtung;
- Fig. 3: eine perspektivische Darstellung einer erfindungsgemäßen Ausführungsform des Filtereinsatzes mit strömungstechnisch durchbrochener Tragscheibe;
- Fig. 4: eine schematische Querschnittsdarstellung der Tragscheibe im äußeren Randbereich mit aufgespritzter Dichtung;
- Fig. 5: eine schematische Querschnittsdarstellung einer weiteren Ausführungsform mit formschlüssig aufgeknüpfter Dichtung;
- Fig. 6: eine Variante der Anordnung nach Fig. 5 mit einer im Randbereich angeordneten, die formschlüssig aufgeknüpfte Dichtung fixierenden Aufdickung;
- Fig. 7: in vergrößerter Detaildarstellung ein weiteres Ausführungsbeispiel mit mittels einer Klemmschräge gequetschter Dichtung;
- Fig. 8: eine Ausführungsform der Erfindung mit in einer umlaufenden Nut formschlüssig gehaltener, eine Montageschräge aufweisenden Dichtung.

### Ausführungsform(en) der Erfindung

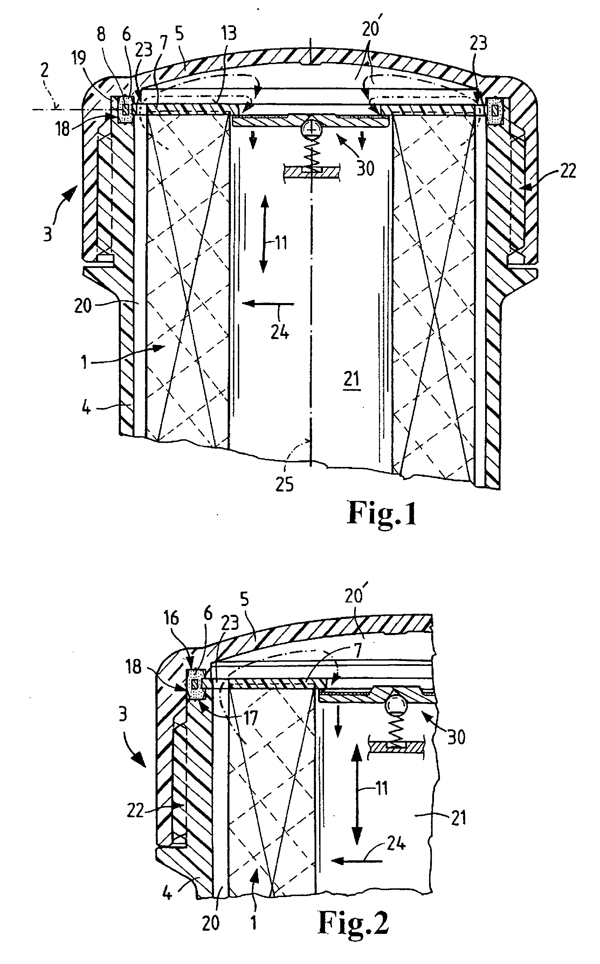

Fig. 1 zeigt in einer Längsschnittdarstellung ausschnittsweise einen Ölfilter oder Ölabscheider eines Kraftfahrzeuges, insbesondere eines Lastkraftwagens. Es kann auch ein Ölfilter oder Ölabscheider eines Industriemotors vorgesehen sein. Ein Ölfilter kann im Haupt- oder Nebenstrom des Ölkreislaufs vom Verbrennungsmotor angeordnet sein.

Der Ölfilter oder Ölabscheider umfasst ein Filtergehäuse 3 mit zwei Gehäuseteilen 4, 5. Das Gehäuseteil 4 ist fest mit dem nicht gezeigten Motor verbunden. Das weitere Gehäuseteil 5 ist als abnehmbarer Deckel ausgebildet und mittels eines umlaufenden Gewindes 22 mit dem motorfesten Gehäuseteil 4 verschraubt.

Teil des Ölfilters oder Ölabscheiders ist ein Filtereinsatz 1 oder ein Coalescereinsatz, der auswechselbar im Filtergehäuse 3 gehalten ist. Der Filtereinsatz 1 ist koaxial zum Filtergehäuse 3 mit einer gemeinsamen, in einer Axialrichtung 11 verlaufenden Mittelachse 25 angeordnet. Das Filtergehäuse 3 und der Filtereinsatz 1 sind im Wesentlichen rotationssymmetrisch zur Mittelachse 25 und dabei etwa zylindrisch ausgebildet. Das Filtergehäuse 3 umschließt den Filtereinsatz 1 im montierten Zustand strömungs- und öldicht auf dessen Außenseite.

Zwischen einer Umfangswand des Gehäuseteils 4 und der Außenseite des Filtereinsatzes 1 verbleibt ein umlaufender Ringraum, der eine Rohseite 20 des Filtereinsatzes 1 bildet. Koaxial dazu liegt innenseitig des Filtereinsatzes 1 ein mittiger Hohlraum, durch den eine Reinseite 21 des Filtereinsatzes 1 gebildet ist. Im Betrieb wird der Filtereinsatz 1 vom Öl entgegen einer durch einen Pfeil 24 angegebenen, senkrecht zur Axialrichtung 11 liegenden Radialrichtung von außen nach innen, also von der Rohseite 20 zur Reinseite 21 durchströmt. Eine Zufuhr des rohen, ungefilterten Öls zur Rohseite 20 und einer Abfuhr des filtrierten Öls von der Reinseite 21 ist der besseren Übersichtlichkeit halber nicht dargestellt.

Das Filtergehäuse 3 ist entlang einer gestrichelt angedeuteten Trennfläche 2 teilbar, indem das obere Gehäuseteil 5 vom motorseitigen Gehäuseteil 4 abnehmbar bzw. mittels des Gewindes 22 abschraubbar ist. Im gezeigten montierten Zustand sind die beiden Gehäuseteile 4, 5 des Filtergehäuses 3 entlang der Trennfläche 2 mittels einer umlaufenden Dichtung 6 gegeneinander abgedichtet. Die umlaufende Dichtung 6 ist unverlierbar am Filtereinsatz 1 befestigt. Hierzu trägt der Filtereinsatz 1 eine umlaufende Tragscheibe 7, an deren äußeren Rand 8 die als Profildichtung ausgeführte Dichtung 6 umläuft.

Nach Lösen des als Deckelteil ausgebildeten Gehäuseteils 5 vom Gehäuseteil 4 kann der Filtereinsatz 1 in der Axialrichtung 11 aus dem Gehäuseteil 4 entnommen und gegen einen neuen, gleichartigen Filtereinsatz 1 ersetzt werden. Infolge der unverlierbaren Befestigung der Dichtung 6 am Filtereinsatz 1 wird diese Dichtung 6 zwangsweise mit ausgetauscht.

Die Trennfläche 2 zwischen den beiden Gehäuseteilen 4, 5 fluchtet mit einer axialen Stirnfläche 13 des Filtereinsatzes 1. Die Tragscheibe 7 ist zusammen mit der Dichtung 6 in der Axialrichtung 11 strömungsdicht ausgebildet und strömungsdicht an der Stirnfläche 13 befestigt. Hierdurch sind nicht nur die beiden Gehäuseteile 4, 5 gegeneinander bzw. zur Außenseite des Filtergehäuses 3 hin abgedichtet. Vielmehr wird durch diese Anordnung auch eine Abdichtung der Rohseite 20 gegenüber der Reinseite 21 hergestellt.

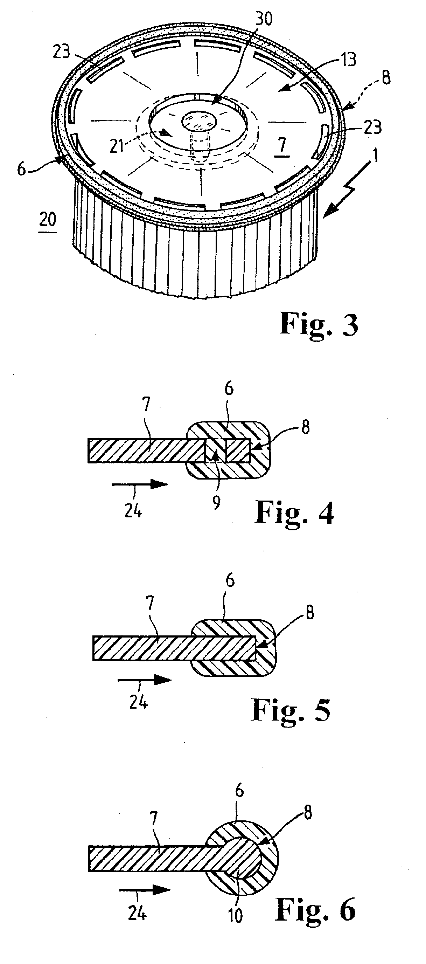

Alternativ kann, wie in Figur 1 schematisch angedeutet ein Umgehungsventil im oberen Reinflüssigkeitsbereich angeordnet sein. In diesem Fall besitzt die Tragscheibe 7 Durchbrüche wie sie in Figur 3. dargestellt sind. Oberhalb der Tragscheibe 7 befindet sich noch die Rohseite 20 um ein Einströmen von Rohflüssigkeit über das Umgehungsventil zu der Reinseite zu ermöglichen. Dies betrifft besondere Betriebszustände, wie z.B. eine erhöhte Verschmutzung des Filtereinsatzes.

Fig. 2 zeigt in einer Ausschnittsdarstellung eine Variante der Anordnung nach Fig. 1, bei der am unteren, motorseitigen Gehäuseteil 4 eine axiale Klemmfläche 17 ausgebildet ist. An dem als Deckelteil ausgebildeten Gehäuseteil 5 ist eine in axialer Richtung wirkende axiale Klemmfläche 16 sowie eine umlaufende, radiale Klemmfläche 18 angeformt. Im gezeigten montierten zustand ist die umlaufende Dichtung 6 in der Axialrichtung 11 zwischen den beiden Gehäuseteilen 4, 5 derart eingeklemmt, dass die beiden axialen Klemmflächen 16, 17 in der Axialrichtung 11 dichtend an der elastischen Dichtung 6 anliegen. Die Klemmung der Dichtung 6 zwischen den axialen Klemmflächen 16, 17 erzeugt zudem eine radiale Aufweitung der Dichtung 6. Dies führt dazu, dass die Dichtung 6 in der Radialrichtung 24 gegen die radiale Klemmfläche 18 dichtend angedrückt ist. Zur Aufrechterhaltung der radialen Anpresskraft ist die umlaufende Tragscheibe 7 eben und zumindest in der Radialrichtung 24 im Wesentlichen starr ausgebildet.

Die Anordnung nach Fig. 1 unterscheidet sich von derjenigen nach Fig. 2 darin, dass die radiale Klemmfläche 18 nicht am oberen Gehäuseteil 5 (Fig. 2), sondern am unteren, motorseitigen Gehäuseteil 4 angeordnet ist. Hierzu ist das untere Gehäuseteil 4 mit einem umlaufenden Rand 19 ausgestattet, dessen radiale Innenseite die radiale Klemmfläche 18 bildet. In den übrigen Merkmalen und Bezugszeichen stimmen die Anordnungen nach den Fig. 1 und 2 überein.

Der perspektivischen Darstellung nach Fig. 3 ist eine Variante des Filtereinsatzes 1 nach den Fig. 1 und 2 zu entnehmen. Die als Profildichtung ausgeführte Dichtung 6 läuft um den äußeren Rand 8 der stirnseitig am Filtereinsatz 1 befestigen Tragscheibe 7 herum. Innenseitig der Dichtung 6, jedoch außenseitig des Filterkörpers vom Filtereinsatz 1 ist die an der Stirnfläche 13 befestigte Tragscheibe 7 mit einer Anzahl über den Umfang verteilter Öffnungen 23 versehen, die im montierten Zustand (Fig. 1) in axialer Überdeckung mit der Rohseite 20 stehen. Bei bestimmten Bauformen des Ölfilters beispielsweise in Verbindung mit einem Bypass- oder Überdruckventil 30 kann hierdurch eine strömungsleitende Verbindung von der Rohseite 20 zur Reinseite 21 hergestellt werden. In den übrigen Merkmalen und Bezugszeichen stimmt der Filtereinsatz 1 nach Fig. 3 mit demjenigen nach den Fig. 1 und 2 überein.

In den Fig. 4 bis 6 sind verschiedene schematische Querschnittsdarstellungen des Randbereiches der Tragscheibe 7 dargestellt. Die im Querschnitt als Profildichtung dargestellte Dichtung 6 umgreift bezogen auf die Radialrichtung 24 außenseitig den äußeren Rand 8 der Tragscheibe 7.

Im Ausführungsbeispiel nach Fig. 4 ist die Dichtung 6 am äußeren Rand 8 der Tragscheibe 7 spritzgusstechnisch angebracht. Das Material der Dichtung 6 kann auch mit einer geeigneten Vorrichtung aufdosiert oder in anderer Weise aufgetragen werden. Hierdurch ergibt sich ein inniger Materialverbund zwischen dem gummielastischen Material der Dichtung 6 und dem im Vergleich dazu abweichenden, steiferen Material der Tragscheibe 7. In Kombination damit ist ein Formschluss durch den U-förmigen Querschnitt der Dichtung 6 gegeben. In weiterer Unterstützung weist die Tragscheibe 7 im Bereich ihres äußeren Randes 8 eine Anzahl von Durchbrüchen 9 auf, die vom spritzgegossenen Material der Dichtung 6 durchgriffen sind.

In den alternativen Ausführungen nach den Fig. 5 und 6 ist die Dichtung 6 elastisch federnd auf den äußeren Rand der Tragscheibe 7 formschlüssig aufgeknüpft. Der Formschluss entsteht durch die U-Querschnittsform der Profildichtung 6, die radial nach innen offen ist und den äußeren, umlaufenden Rand 8 der Tragscheibe 7 umgreift. Da auch die Dichtung 6 als geschlossener Ring umläuft, ist sie formschlüssig unverlierbar an der Tragscheibe 7 gehalten. Unter Ausnutzung der elastischen Verformbarkeit der Dichtung 6 kann diese als Einzelteil gefertigt und auf den Rand 8 aufgezogen bzw. aufgeknüpft werden. Zur Unterstützung des Formschlusses ist der Querschnitt der Tragscheibe 7 im Bereich des äußeren Randes 8 als umlaufende Aufdickung 10 (Fig. 6) ausgeführt, die allseitig von der Profildichtung 6 umschlossen wird.

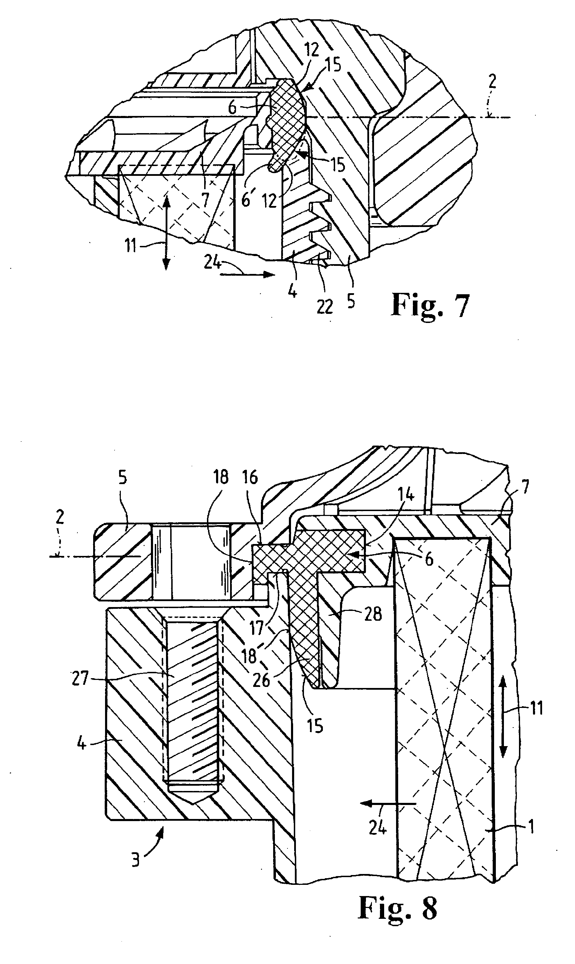

Fig. 7 zeigt in einer vergrößerten Detailansicht ein weiteres Ausführungsbeispiel der Erfindung, demnach die Dichtung 6 in ihrem Querschnitt radial außenseitig und bezogen auf die Axialrichtung 11 beidseitig je eine umlaufende Montageschräge 15 aufweist. Die beiden Montageschrägen 15 erleichtern das Einfädeln der Dichtung 6 in ihrem vorgesehenen Dichtsitz. Beim Zusammenschrauben der beiden Gehäuseteile 4, 5 mittels des Gewindes 22 werden je eine bezogen auf die Axialrichtung 11 bzw. die Spannrichtung geneigte Klemmschräge 12 in der Axialrichtung gegeneinander verspannt. Die beiden Klemmschrägen 12 liegen an den Montageschrägen 15 an. Infolge der axialen Spannbewegung und ihrer geneigten Form erzeugen sie eine auf die Dichtung 6 entgegen der Radialrichtung 24 wirkende Klemmkraft, in dessen Folge sich der Querschnitt der Dichtung 6 in eine mit dem Bezugszeichen 6' bezeichnete Gestalt verformt und elastisch federnd an der zugeordneten Klemmschräge 12 anliegt. Die Klemmschrägen 12 wirken demnach entgegen der Radialrichtung 24, also in einer parallel zur Trennfläche 2 liegenden Richtung auf die Dichtung 6 ein.

Fig. 8 zeigt in einer ausschnittsweisen Querschnittsdarstellung ein weiteres Ausführungsbeispiel der Erfindung als vergrößerte Detailansicht im Bereich der Trennfläche 2 zwischen den beiden Gehäuseteilen 4, 5 des Filtergehäuses 3. Alternativ zur Verschraubung der Gehäuseteile 4, 5 mittels eines Gewindes 22 (Fig. 1, 2, 7) ist hier eine Verschraubung der beiden Gehäuseteile 4, 5 über Schraublöcher 27 vorgesehen, in die nicht dargestellte Verbindungsschrauben eingedreht werden. Die umlaufende Dichtung 6 ist hier in einer umlaufenden, in der Radialrichtung 24 nach außen offenen Nut 14 der Tragscheibe 7 formschlüssig gehalten. Ein in der Radialrichtung 24 hervorstehender Abschnitt der Dichtung 6 ist klemmend zwischen einer axialen Klemmfläche 16 des Gehäuseteiles 5 und einer axialen Klemmfläche 17 des Gehäuseteiles 4 gehalten und darüber hinaus in der radialen Richtung 24 gegen eine radiale Klemmfläche 18 des Gehäuseteiles 5 dichtend angedrückt. Ergänzend dazu ist die Tragscheibe 7 mit einem umlaufenden, zum motorseitigen Gehäuseteil 4 hinweisenden Kragen 28 versehen, der radial innenseitig einer zylindrisch umlaufenden Lippe 26 der Dichtung 6 angeordnet ist. Die umlaufende Lippe 26 ist im Bereich ihres freien Randes mit einer Montageschräge 15 versehen. Bezogen auf die Axialrichtung 11 liegt ein mittlerer, zwischen der Montageschräge 15 und der Nut 14 liegender Abschnitt der Lippe 26 radial außenseitig an einer radialen Klemmfläche 18' des Gehäuseteils 4 an. Zur Erzeugung der entsprechenden Anpresskraft dient der radial innenliegende, aus dem vergleichsweise steifen Material der Tragscheibe 7 einteilig hergestellte Kragen 28, der ein Einfedern der Lippe 26 radial nach innen verhindert.

In den übrigen Merkmalen und Bezugszeichen stimmen die Anordnungen nach den Fig. 7 und 8 untereinander sowie mit den Ausführungsbeispielen nach den Fig. 1 bis 6 überein.

## Patentansprüche

1. Filtereinsatz, vorgesehen als auswechselbarer Einsatz in einem Ölfilter eines Verbrennungsmotors, wobei der Ölfilter ein entlang einer Trennfläche (2) teilbares Filtergehäuse (3) und den auswechselbaren Filtereinsatz (1) umfasst, und wobei zwei Gehäuseteile (4, 5) des Filtergehäuses (3) entlang der Trennfläche (2) mittels einer Dichtung (6) gegeneinander abgedichtet sind, **dadurch gekennzeichnet, dass** die Dichtung (6) am Filtereinsatz (1) unverlierbar befestigt ist, wobei die Dichtung (6) am Filtereinsatz (1) am äußeren Rand (8) der Tragscheibe (7) spritzgusstechnisch angebracht ist, wobei die Tragscheibe (7) im Bereich ihres äußeren Randes (8) Durchbrüche (9) aufweist, die vom spritzgegossenen Material der Dichtung (6) durchgriffen sind, wobei die Dichtung (6) eine Montageschräge (15) aufweist, wobei ein Umgehungsventil (30) im oberen Reinflüssigkeitsbereich angeordnet ist, wobei die Tragscheibe (7) mit einer Anzahl über den Umfang verteilter Öffnungen (23) versehen ist, die im montierten Zustand in axialer Überdeckung mit der Rohseite (20) stehen, wobei in Verbindung mit einem Umgehungsventil (30) eine strömungsleitende Verbindung von der Rohseite (20) zur Reinseite (21) hergestellbar ist.

2. Filtereinsatz nach Anspruch 1, **dadurch gekennzeichnet, dass** die umlaufende, insbesondere ebene Tragscheibe (7) zumindest in Radialrichtung (24) im Wesentlichen starr ist.

3. Ölfilter insbesondere eines Kraftfahrzeuges, umfassend ein entlang einer Trennfläche (2) teilbares Filtergehäuse (3) und einen auswechselbaren Filtereinsatz (1), wobei zwei Gehäuseteile (4, 5) des Filtergehäuses (3) entlang der Trennfläche (2) mittels einer Dichtung (6) gegeneinander abgedichtet sind, **gekennzeichnet durch** einen Filtereinsatz (1) nach einem der Ansprüche 1 oder 2.

4. Ölfilter nach Anspruch 3, **dadurch gekennzeichnet, dass** sich das Filtergehäuse (3) entlang einer Axialrichtung (11) erstreckt und insbesondere etwa zylindrisch ausgebildet ist, wobei die Trennfläche (2) radial zur Axialrichtung (11) verläuft, und wobei die umlaufende Dichtung (6) im montierten Zustand in der Axialrichtung (11) zwischen den beiden Gehäuseteilen (4, 5) eingeklemmt ist.

5. Ölfilter nach Anspruch 3 oder 4, **dadurch gekennzeichnet, dass** die Dichtung (6) in der Radialrichtung (24) gegen zumindest eines der beiden Gehäuseteile (4, 5) dichtend angedrückt ist.

6. Ölfilter nach einem der Ansprüche 3 bis 5, **dadurch gekennzeichnet, dass** zumindest eines der beiden Gehäuseteile (4, 5) eine in der Ebene der Trennfläche (2) auf die Dichtung (6) einwirkende Klemmschräge (12) aufweist.

7. Ölfilter nach einem der Ansprüche 3 bis 6, **dadurch gekennzeichnet, dass** die Trennfläche (2) zumindest näherungsweise mit einer axialen Stirnfläche (13) des Filtereinsatzes (1) fluchtet, wobei die Tragscheibe (7) mit der Dichtung (6) an der axialen Stirnfläche (13) strömungsdicht ausgebildet und befestigt ist.

## Claims

1. Filter insert, provided as replaceable insert in an oil filter of an internal combustion engine, the oil filter comprising a dividable filter housing (3) along a separating surface (2) and the replaceable filter insert (1), and two housing components (4, 5) of the filter housing (3) being sealed against each other along the separating surface (2) by means of a seal (6), **characterized in that** the seal (6) is attached undetachably to the filter insert (1), the seal (6) being attached to the filter insert (1) at the outer edge (8) of the support plate (7) by injection molding, the support plate (7) featuring in the area of its outer edge (8) breakthroughs (9) which are penetrated by the injection-molded material of the seal (6), the seal (6) featuring a mounting ramp (15), a bypass valve (30) being disposed in the upper clean fluid area, the support plate (7) being provided with a certain number of openings (23) spread over the circumference which overlap the dirty side (20) axially when mounted, a flow-conducting connection from the dirty side (20) to the clean side (21) being able to be realized in connection with a bypass valve.

2. Filter insert according to claim 1, **characterized in that** the circumferential, in particular plane support plate (7) is substantially rigid at least in radial direction (24).

3. Oil filter in particular of a motor vehicle, comprising a dividable filter housing (3) along a separating surface (2) and a replaceable filter insert (1), two housing components (4, 5) of the filter housing (3) being sealed against each other along the separating surface (2) by means of a seal (6), **characterized by** a filter insert (1) according to one of the claims 1 or 2.

4. Oil filter according to claim 3, **characterized in that** the filter housing (3) extends along an axial direction (11) and has a particularly cylindrical design, the separating surface (2) extending radially to the axial direction (11), and the circumferential seal (6) being clamped in axial direction (11) between the two housing components (4, 5) in mounted condition.

5. Oil filter according to claim 3 or 4, **characterized in that** the seal (6) is pressed sealingly in radial direction (24) against at least one of the two housing components (4, 5).

6. Oil filter according to one of the claims 3 to 5, **characterized in that** at least one of the two housing components (4, 5) features in the plane of the separating surface (2) a clamping bevel (12) having an impact on the seal (6).

7. Oil filter according to one of the claims 3 to 6, **characterized in that** the separating surface (2) is aligned at least approximately with an axial end face (13) of the filter insert (1), the support plate (7) having a flow-tight design and being attached to the seal (6) at the axial end face (13).

## Revendications

1. Insert de filtre prévu en tant qu'insert échangeable dans un filtre à huile d'un moteur à combustion interne, le filtre à huile comprenant un boîtier de filtre (3) séparable le long de la surface de séparation (2) et l'insert de filtre échangeable (1), deux parties (4, 5) du boîtier de filtre (3) étant étanchées par un joint (6) l'une par rapport à l'autre le long de la surface de séparation (2), **caractérisé en ce que** le joint (6) est fixé de manière imperdable à l'insert de filtre (1), le joint (6) de l'insert de filtre (1) étant moulé par injection sur le bord extérieur (8) de la rondelle de support (7), la rondelle de support (7) présentant des ajours (9) au niveau de son bord extérieur (8) sur lesquels le matériau moulé par injection du joint (6) est en prise, le joint (6) présentant un chanfrein de montage (15), une soupape de dérivation (30) étant disposée dans la partie supérieure de liquide pur, la rondelle de support (7) étant dotée de plusieurs ouvertures (23) réparties sur le périmètre et, en position montée, se chevauchant en sens axial avec le côté brut (20), une liaison acheminant le flux du côté brut (20) vers le côté pur (21) pouvant être générée en combinaison avec une soupape de dérivation (30).

2. Insert de filtre prévu selon la revendication 1, **caractérisé en ce que** la rondelle de support (7) circulaire, notamment plane, est essentiellement rigide, tout au moins en sens radial (24).

3. Filtre à huile, notamment d'un véhicule automobile, comprenant un boîtier de filtre (3) séparable le long d'une surface de séparation (2) et un insert de filtre (1) échangeable, deux parties (4, 5) du boîtier de filtre (3) étant étanchées par un joint (6) l'une par rapport à l'autre le long de la surface de séparation (2), **caractérisé par** un insert de filtre (1) selon l'une des revendications 1 ou 2.

4. Filtre à huile selon la revendication 3, **caractérisé en ce que** le boîtier de filtre (3) s'étend en sens axial (11) et a notamment une forme quasi cylindrique, la surface de séparation (2) évoluant de manière radiale par rapport au sens axial (11) et le joint circulaire (6) étant serré en sens axial (11), en position montée, entre les deux parties du boîtier (4, 5).

5. Filtre à huile selon la revendication 3 ou 4, **caractérisé en ce que** le joint (6) est pressé de manière étanche en sens radial (24) contre au moins l'une des deux parties du boîtier (4, 5).

6. Filtre à huile selon l'une des revendications 3 à 5, **caractérisé en ce qu'**au moins l'une des deux parties du boîtier (4, 5) présente un chanfrein de serrage (12) agissant sur le joint (6) dans le plan de la surface de séparation (2).

7. Filtre à huile selon l'une des revendications 3 à 6, **caractérisé en ce que** la surface de séparation (2) est alignée, au moins approximativement, sur une surface frontale axiale (13) de l'insert de filtre (1), la rondelle de support (7) étant logée et fixée avec le joint (6) sur la face frontale axiale de manière étanche au flux.
